# EUROPÄISCHE PATENTSCHRIFT

(11) **EP 1 290 097 B1**
(45) Veröffentlichungstag und Bekanntmachung des Hinweises auf die Patenterteilung: **17.08.2005**
(21) Anmeldenummer: 01949401.2
(22) Anmeldetag: 12.06.2001
(51) Int. Cl.: C09D 163/00, C09D 5/03

(54) **SELBSTVERNETZENDER PULVERLACK AUF DER BASIS VON EPOXIDHARZEN UND SEINE VERWENDUNG**
SELF-CROSS LINKING POWDER PAINT BASED ON EPOXY RESINS AND THE USE THEREOF
PEINTURE EN POUDRE AUTORETICULANTE A BASE DE RESINES EPOXYDES, ET SON UTILISATION

(30) Priorität: 15.06.2000 DE 10029548
(43) Veröffentlichungstag der Anmeldung: 12.03.2003
(73) Patentinhaber: BASF Coatings AG, 48165 Münster (DE)
(72) Erfinder: BOYSEN, Rolf, 48163 Münster (DE); RIESTENPATT, Helmut, 48165 Münster (DE); HILGER, Christoph, 48165 Münster (DE); VIETZE, Carsten, 48317 Drensteinfurt (DE); RADEMACHER, Josef, 48165 Münster (DE)
(74) Vertreter: Fitzner, Uwe, Dr.
(86) Internationale Anmeldenummer: PCT/EP2001/006615
(87) Internationale Veröffentlichungsnummer: WO 2001/096486

(56) Entgegenhaltungen:
- JP-A- 5 279 452
- US-A- 4 039 548
- US-A- 5 153 239
- DATABASE WPI Section Ch, Week 199347 Derwent Publications Ltd., London, GB; Class A21, AN 1993-374644 XP002177806 & JP 05 279452 A (NIPPON KAYAKU KK), 26. Oktober 1993 (1993-10-26)

## Beschreibung

Die vorliegende Erfindung betrifft einen neuen, selbstvernetzenden Pulverlack auf der Basis von Epoxidharzen und seine Verwendung zur Beschichtung von Formteilen.

Pulverlacke auf Epoxidharzbasis sind aus den europäischen Patentanmeldungen EP 0 509 392 A 1, EP 0 509 393 A 1, EP 0 322 827 A 1 oder EP 0 517 536 A 1, den US-Patenten US 5,055,524 oder US 4,849,283 oder den Firmenschriften Coatings Partner, The magazine of BASF, Powder Coatings Special, 1/2000, oder BASF Coatings AG "Pulverlacke, Pulverlacke für industrielle Anwendungen", Januar 2000, bekannt Es handelt sich hierbei um fremdvernetzende Systeme, d.h., die Epoxisdharze werden mit Härtern, wie phenolische oder aminische Härter oder bicyclische Guanidine, vemetzt.

Als fremdvernetzend werden Beschichtungsstoffe bezeichnet, worin eine Art komplementärer reaktiver funktioneller Gruppen in dem Bindemittel, und eine andere Art in einem Härter oder Vernetzungsmittel vorliegen. Die komplementären reaktiven funktionellen Gruppen können miteinander reagieren und so ein dreidimensionales Netzwerk aufbauen. Im Gegensatz dazu bezeichnet der Begriff "selbstvernetzend" die Eigenschaft eines Bindemittels mit sich selbst Vernetzungsreaktionen einzugehen. Voraussetzung hierfür ist, daß in den Bindemitteln bereits beide Arten von komplementären reaktiven funktionellen Gruppen enthaltend sind, die für eine Vernetzung notwendig sind, oder daß eine Art von reaktiven funktionellen Gruppen vorliegt, die mit "mit sich selbst" reagieren kann. Ergänzend wird hierzu auf Römpp Lexikon Lacke und Druckfarben, Georg Thieme Verlag, Stuttgart, New York, 1998, »Härtung«, Seiten 274 bis 276, insbesondere Seite 275, unten, verwiesen.

Formteile, insbesondere Motorenblöcke für Kraftfahrzeuge aller Art, werden zunehmend aus optischen Gründen und aus Gründen des Korrosionsschutzes lackiert. Da Pulverlacke lösemittelfrei, leicht applizierbar und als Overspray leicht zurückzugewinnen sind und die entsprechenden Pulverlackierungen gute mechanische Eigenschaften und eine feste Haftung auf dem Substrat aufweisen und einen sehr guten Korrosionsschutz bieten, werden sie zunehmend für diesen Verwendungszweck eingesetzt.

Die Motorblockrohlinge werden üblicherweise bereits im Eisenwerk beschichtet und danach durch Fräsen und/oder Bohren mechanisch nachbearbeitet. Die Wärme, die bei diesen Arbeitsvorgängen entsteht, läßt die üblichen und bekannten Pulverlackierungen erweichen, so daß keine definierten Schnitte und Bohrungen hergestellt werden können. Außerdem bilden die Pulverlackierungen aufgrund der thermisch/mechanischen Belastung schmierige, klebstoffartige, sehr schwer entfembare Polymerschmelzen, die die Werkzeuge verkleben. Eine Erhöhung der Vernetzungsdichte bringt im allgemeinen keine Lösung, da die hiermit einhergehende Versprödung der Pulverlackierungen zu ihrem Abplatzen bei der Nachbearbeitung führen kann.

Aus DATABASE WPI Section Ch, Week 199347 Derwent Publications Ltd., London, GB; Class A21, AN 1993-374644 und JP 05 279452 A (NIPPON KAYAKU KK) sind Mischungen bekannt, enthaltend (A) Epoxidharze, enthaltend 25 bis 90 Prozent an (a) Bisphenolepoxidharzen, welche ein Epoxiäquivalent von mindestens 600 besitzen; 3 bis 55 Prozent an (b) internplastifizierten, flüssigen Epoxidharzen, welche ein Epoxiäquivalent von mindestens 200 besitzen; und 10 bis 40 Prozent an (c) halogenierten Epoxidharzen, und (B) Härter und/oder (C) Beschleuniger.

Aus der US-A-5 153 239 ist ein Epoxidharzpulver bekannt, umfassend (A) eine Epoxidharzmischung umfassend ein Bisphenolepoxidharz und ein polyfunktionelles Epoxidharz, welches mindestens drei Epoxigruppen pro Molekül enthält; einen Härter umfassend eine Mischung enthaltend Dicyandiamid und (C) einen Füller.

Aufgabe der vorliegenden Erfindung ist es, einen neuen selbstvernetzenden Pulverlack zu finden, der die Nachteile des Standes der Technik nicht mehr aufweist, sondern der sich in einfacher Weise aus leicht zugänglichen Ausgangsverbindungen herstellen lässt und Pulverlackierungen liefert, die bei vollem Erhalt des sonstigen vorteilhaften anwendungstechnischen Eigenschaftsprofils spanbar, fräsbar und bohrbar sind und die sich daher sehr gut für die Beschichtung von Formteilen, insbesondere Motorblöcken, eignen, die mechanisch nachbearbeitet werden müssen.

Demgemäss wurde der neue selbstvemetzende Pulverlack gefunden, enthaltend
(A) bis zu 50 Gew.-%, bezogen auf den Pulverlack, eines Gemischs aus
   (A1) mindestens einem Epoxidharz eines Epoxyäquivalentgewichts (EEW) <800 g,
   (A2) mindestens einem Epoxidharz eines Epoxyäquivalentgewichts (EEW) von 800 bis 1.500 g und
   (A3) mindestens einem Epoxidharze eines Epoxyäquivalentgewichts (EEW) >1500 g,
   wobei (A) aus 10 bis 40 Gew.-% (A1), 46 bis 68 Gew.-% (A2) und 5 bis 15 Gew.-% (A3) besteht, mit der Maßgabe, daß sich die Gew.-% (A1), (A2) und (A3) zu 100 Gew.-% addieren,
   und
(B) mindestens 50 Gew.-%, bezogen auf den Pulverlack, mindestens eines Füllstoffs.

Weitere erfindungsgemäße Gegenstände gehen aus der Beschreibung hervor.

Im Hinblick auf den Stand der Technik war es überraschend und für den Fachmann nicht vorhersehbar, daß der erfindungsgemäße Pulverlack das Problem, das der vorliegenden Erfindung zugrunde liegt, zu lösen vermag. Ganz im Gegenteil stand zu erwarten, daß auch die erfindungsgemäßen Pulverlackierungen ebenso wie die üblichen und bekannten Pulverlackierungen auf Epoxidharzbasis nicht spanbar, fräsbar oder bohrbar sein würden, sondern bei der mechanischen Nachbearbeitung aufgrund der thermisch/mechanischen Belastung ebenfalls schmierige, klebstoffartige, sehr schwer entfembare Polymerschmelzen liefern würden.

Der erste erfindungswesentliche Bestandteil des erfindungsgemäßen Pulverlacks ist das Gemisch (A) aus Epoxidharzen, das selbstvernetzende Eigenschaften hat.

Der Gehalt des erfindungsgemäßen Pulverlacks an dem Epoxidharzgemisch (A) beträgt, bezogen auf den Pulverlack, bis zu 50 Gew.-%. Vorzugsweise liegt der Gehalt bei 20 bis 49, bevorzugt 25 bis 48, besonders bevorzugt 30 bis 47, ganz besonders bevorzugt 35 bis 46 und insbeondere 40 bis 45 Gew.-%.

Als Epoxidharze kommen im Grunde alle Epoxidharze in Betracht, die die nachstehend beschriebenen Epoxidäquivalentgewichte (EEW) aufweisen und in der Kombination miteinander selbstvernetzend sind. Besonders vorteilhafte Epoxidharze sind lineare, hinsichtlich der Epoxidgruppen bifunktionelle Epoxidharze auf der Basis aromatischer Diphenole, vorzugsweise Bisphenol A und F, insbesondere Bisphenol A. Sie werden erfindungsgemäB besonders bevorzugt verwendet

Erfindungsgemäß enthält das Epoxidharzgemisch (A) mindestens ein Epoxidharz (A1) eines EEW von <800, vorzugsweise <750, bevorzugt <700 und insbesondere <650 g. Der Gehalt des Gemischs (A) an (A1) kann breit variieren. Vorzugsweise liegt er, bezogen auf (A), bei 10 bis 40, bevorzugt 12 bis 39, besonders bevorzugt 14 bis 38, ganz besonders bevorzugt 18 bis 37 und insbesondere 20 bis 36 Gew.-%.

Außerdem enthält das Epoxidharzgemisch (A) erfindungsgemäß mindestens ein Epoxidharz (A2) eines EEW von 800 bis 1.500, vorzugsweise 800 bis 1.300, besonders bevorzugt 800 bis 1.100, ganz besonders bevorzugt 800 bis 1.000 und insbesondere 800 bis 900 g. Der Gehalt des Gemischs (A) an (A2) kann breit variieren. Vorzugsweise liegt er, bezogen auf (A), bei 46 bis 68 und insbesondere 50 bis 65 Gew.-%.

Des weiteren enthält das Epoxidharzgemisch (A) erfindungsgemäß mindestens ein Epoxidharz (A3) eines EEW >1.500. Der Gehalt des Gemischs (A) an (A3) kann breit variieren. Vorzugsweise liegt er, bezogen auf (A), bei 5 bis 15, bevorzugt 6 bis 14, besonders bevorzugt 7 bis 13, ganz besonders bevorzugt 8 bis 12 und insbesondere 8,5 bis 11,5 Gew.-%.

Die vorstehend angegebenen Gewichtsprozente für die Epoxidharze (A1), (A2) und (A3) addieren sich in den erfindungsgemäßen Pulverlacken stets zu 100 Gew.-%

Die Epoxidharze (A1), (A2) und (A3) sind an sich bekannte Verbindungen und werden beispielsweise von den Firmen Dow Chemical, Shell Chemie oder Ciba Specialty Chemical vertrieben.

Als weiteren erfindungswesentlichen Bestandteil enthält der erfindungsgemäße Pulverlack mindestens einen Füllstoff (B). Als Füllstoffe (B) kommen grundsätzlich alle anorganischen und organischen, insbesondere anorganischen Füllstoffe in Betracht, wie sie beispielsweise in Römpp Lexikon Lacke und Druckfarben, Georg Thieme Verlag, Stuttgart, New York, 1998, "Füllstoffe", Seiten 250 bis 252, beschrieben werden, und die bei der Nachbearbeitung der Formteile kein Aufschmelzen und/oder keine Zersetzung zeigen.

Die Füllstoffe (B) weisen vorzugsweise eine Dichte von 0,8 bis 3,6, vorzugsweise 0,9 bis 3,4, bevorzugt 1,0 bis 3,2 und insbesondere 1,1 bis 3,0 gcm⁻³ auf. Zwar könnten in Einzelfällen auch Füllstoffe (B) mit einer niedrigeren Dichte verwendet werden, indes besteht dann die Gefahr, daß diese Füllstoffe (B) bzw. die sie enthaltenden Pulverlackpartikel in den Beschichtungsstoffen bei längerer Lagerung "aufschwimmen". Andererseits könnten in Einzelfällen auch Füllstoffe (B) mit einer höheren Dichte verwendet werden, indes besteht dann die Gefahr, daß sich die elektrostatischen Eigenschaften beim Pulversprühen nachteilig verändern.

Beispiele geeigneter Füllstoffe (B) sind vemetzte oder unvernetzte, organische oder metallorganische Polymere, anorganische Mineralien, Salze oder Keramikmaterialien oder organisch modifizierte Keramikmaterialien oder Gemische dieser Stoffe. Von diesen sind die anorganischen Mineralien von Vorteil und werden deshalb bevorzugt verwendet. Hierbei kann es sich um natürliche und synthetische Mineralien handeln.

Beispiele für die gut geeigneten Mineralien sind Siliziumdioxid, Aluminiumsilikate, Calciumsilikate, Magnesiumsilikate, Calciumaluminiumsilikate, Magnesiumaluminiumsilikate, Calciummagnesiumsilikate, Calciummagnesiumaluminiumsilikate, Berylliumaluminiumsilikate, Aluminiumphosphat oder Calciumphosphat oder Gemische hiervon. Von diesen sind die Silikate besonders vorteilhaft und werden deshalb erfindungsgemäß besonders bevorzugt als Füllstoffe (B) verwendet.

Die Füllstoffe (B) sind in den erfindungsgemäßen Pulverlacken in einer Menge von, bezogen auf den Pulverlack, mindestens 50 Gew.-%, Vorzugsweise enthält der erfindungsgemäße Pulverlack 50,5 bis 80, bevorzugt 51 bis 75, besonders bevorzugt 51,5 bis 70, ganz besonders bevorzugt 52 bis 65 und insbesondere 52,5 bis 60 Gew.-.%, jeweils bezogen auf den erfindungsgemäßen Pulverlack.

Der erfindungsgemäße Pulverlack kann mindesten einen Beschleuniger (C) (zu dem Begriff vgl. Römpp Lexikon Lacke und Druckfarben, Georg Thieme Verlag, Stuttgart, New York, 1998, "Beschleuniger", Seite 70) enthalten. Als Beschleuniger (C) kommen alle Verbindungen in Betracht, wie sie üblicherweies zur Aktivierung von Vemetzungsreaktionen von Epoxidharzen angewandt werden.

Beispiele geeigneter Beschleuniger (C) und ihre Wirkungsweise werden in dem Lehrbuch von Johan Bieleman "Lackadditive", Wiley-VCH, Weinheim, New York, 1998, Seiten 263 bis 269, beschrieben.

Beispiele gut geeigneter Beschleuniger (C) sind Phosphoniumsalze organischer oder anorganischer Säuren, Imidazol und Imidazolderivate, quartäre Ammoniumverbindungen sowie Amine.

Beispiele für geeignete Phosphoniumsalze (C) sind Ethyltriphenylphosphoniumiodid, Ethyltriphenylphosphoniumchlorid, Ethyltriphenylphosphoniumthiocyanat, Ethyltriphenylphosphonium-Acetat-Essigsäurekomplex, Tetrabutylphosphoniumiodid, Tetrabutylphosphoniumbromid und Tetrabutylphosphonium-Acetat-Essigsäurekomplex. Diese sowie weitere geeignete Phosphoniumsalze (C) werden beispielsweise in den US-Patentschriften US 3, 477,990 oder US 3,341,580 beschrieben.

Beispeile geeigneter Imidazole (C) sind 2-Styrylimidazol, 1-Benzyl-2-methylimidazol, 2-Methylimidazol und 2-Butylimidazol. Diese sowie weitere Imidazole werden z.B. in dem belgischen Patent Nr. 756,693 beschrieben.

Die Beschleuniger (C) können in dem erfindungsgemäßen Pulverlack in einer Menge von vorzugsweise 0,01 bis 5, bevorzugt, 0,05 bis 4,5, besonders bevorzugt 0,1 bis 4, ganz besonders bevorzugt 0,3 bis 3,5 und insbesondere 0,5 bis 3 Gew.-%, jeweils bezogen auf den Pulverlack, enthalten sein.

Es ist der besondere Vorteil des erfindungsgemäßen Pulverlacks, daß durch den Beschleuniger (C) trotz der Abwesenheit der üblichen und bekannten Härter für Epoxidharze (vgL Johan Bieleman "Lackadditive", Wiley-VCH, Weinheim, New York, 1998, Seiten 263 bis 269) die Selbstvernetzung des Epoxidharzgemischs signifikant beschleunigt werden kann.

Der erfindungsgemäße Pulverlack kann noch mindestens ein farb- und/oder effektgebendes Pigment (D) enthalten.

Die Pigmente (D) können aus anorganischen oder organischen Verbindungen bestehen. Der erfindungsgemäße Pulverlack gewährleistet daher aufgrund dieser Vielzahl geeigneter Pigmente (D) eine universelle Einsatzbreite und ermöglicht die Realisierung einer Vielzahl von Farbtönen und optischer Effekte.

Als Effektpigmente (D) können Metallplättchenpigmente wie handelsübliche Aluminiumbronzen, gemäß DE-A-36 36 183 chromatierte Aluminiumbronzen, handelsübliche Edelstahlbronzen und nichtmetallische Effektpigmente, wie zum Beispiel Perlglanz- bzw. Interfereazpigmente, eingesetzt werden. Ergänzend wird auf Römpp Lexikon Lacke und Druckfarben, Georg Thieme Verlag, 1998, Seiten 176, »Effektpigmente« und Seiten 380 und 381 »Metalloxid-Glimmer-Pigmente« bis »Metallpigmente«, verwiesen.

Beispiele für geeignete anorganische farbgebende Pigmente (D) sind Titandioxid, Eisenoxide, Sicotransgelb und Ruß, insbesondere Ruß. Beispiele für geeignete organische farbgebende Pigmente sind Thioindigopigmente Indanthrenblau, Cromophthalrot, Irgazinorange und Heliogengrün. Ergänzend wird auf Römpp Lexikon Lacke und Druckfarben, Georg Thieme Verlag, 1998, Seiten 180 und 181, »Eisenblau-Pigmente« bis »Eisenoxidschwarz«, Seiten 451 bis 453 »Pigmente« bis »Pigmentsvolumenkonzentration«, Seite 563 »ThioindigoPigmente« und Seite 567 »Titandioxid-Pigmente« verwiesen.

Der Anteil der Pigmente (D) an dem erfindungsgemäßen Pulverlack kann außerordentlich breit variieren und richtet sich vor allem nach der Deckkraft der Pigmente, dem gewünschten Farbton und dem gewünschten optischen Effekt. Der Fachmann kann daher die Pigmente (D) und ihre Menge, die für einen gegebenen erfindungsgemäßen Pulverlack besonder gut geeignet sind, anhand seines allgemeinen Fachwissens ggf. unter Zuhilfenahme einfacher Vorversuche beispielsweise im Rahmen von Tönversuchen auswählen.

Darüber hinaus kann der erfindungsgemäße Pulverlack mindestens einen üblichen und bekannten Zusatzstoff (E) in üblichen und bekannten, wirksamen Mengen enthalten.

Beispiele geeigneter Zusatzstoffe (E) sind zusätzliche oligomere und polymere Bindemittel, UV-Absorber, Lichtschutzmittel, Radikalfänger, thermolabile radikalische Initiatoren, Entlüftungsmittel, Slipadditive, Polymerisationsinhibitoren, Entschäumer, Emulgatoren, Netz- und Dipergiermittel, Haftvermittler, Verlaufmittel, filmbildende Hilfsmittel, Flammschutzmittel, Korrosionsinhibitoren, RieseIhilfen, Wachse und Mattierungsmittel.

Die Herstellung der erfindungsgemäßen Pulverlacke erfolgt nach den üblichen und bekannten Methoden, wie sie beispielsweise in der Produkt-Information der Firma BASF Lacke + Farben AG, "Pulverlacke", 1990 oder der Firmenschrift von BASF Coatings AG "Pulverlacke, Pulverlacke für industrielle Anwendungen", Januar 2000, beschrieben werden, durch Homogenisieren und Dispergieren, beispielsweise mittels eines Extruders, Schneckenkneters u.ä.. Nach Herstellung der erfindungsgemäßen Pulverlacke werden diese durch Vermahlen und ggf. durch Sichten und Sieben auf die gewünschte Korngrößenverteilung eingestellt. Eine besonders gut geeignete Korngrößenverteilung wird beispielsweise in der europäischen Patentanmeldung EP 0 666 779 A 1 beschrieben.

Auch die Applikation und die Härtung der erfindungsgemäßen Pulverlacke erfordern keine besonderen Maßnahmen, sondern werden, wie in den vorstehend aufgeführten Firmenschriften beschrieben, durchgeführt.

Die Dicke der resultierenden erfindungsgemäßen Pulverlackierung kann breit variieren. Vorzugsweise liegt sie bei 20 bis 100, bevorzugt 22 bis 90, besonders bevorzugt 24 bis 80, ganz besonders bevorzugt 26 bis 70 und insbesondere 28 bis 65 µm.

Die erfindungsgemäße Pulverlackierung kann zur Beschichtung von Formteilen aus Metall, Glas, temperaturbeständigen Kunststoffen, Holz oder synthetischen und natürlichen mineralischen Werkstoffen oder Verbundmaterialien hieraus verwendet werden. Sie kommt daher für die Beschichtung von Bauteilen im Innen- und Außenbereich, von Möbeln, Türen, Fensterrahmen, industriellen Bauteilen für den privaten und professionellen Gebrauch, inklusive Container, Emballagen und Coils, sowie von Bauteilen für die Herstellung von Transportvorrichtungen jeglicher Art, inklusive Kraftfahrzeuge oder Schiffe, in Betracht. Vor allem aber wird sie zur Beschichtung von Formteilen angewandt, die nach ihrer Beschichtung mechanisch formgebend nachbearbeitet werden, beispielsweise durch Fräsen und/oder Bohren. Ganz besondere Vorteile entfaltet die erfindungsgemäße Pulverlackierung bei der Beschichtung von Motorblöcken, insbesondere von Motorblöcken für Kraftfahrzeugen jeglicher Art.

Die erfindungsgemäße Pulverlackierung hat einen sehr guten Verlauf, eine hohe optische Qualität, ein sehr hohes Deckvermögen, eine vorzügliche Haftung zu den hiermit beschichteten Formteilen sowie eine sehr gute Korrosionsschutzwirkung und Kratzfestigkeit. Vor allem aber wird sie bei die Nachbearbeitung der Formteile nicht beschädigt und bildet keine schmierige, klebstoffartige, sehr schwer entfernbare Polymerschmelzen, die die Werkzeuge verkleben. Sie ist spanbar und kann zusammen mit dem Formteil gefräst und/oder gebohrt werden.

## Patentansprüche

1. Selbstvemetzender Pulverlack, enthaltend
(A) bis zu 50 Gew.-%, bezogen auf den Pulverlack, eines Gemischs aus
(A1) mindestens einem Epoxidharz eines Epoxyäquivalentgewichts (EEW) <800 g,
(A2) mindestens einem Epoxidharz eines Epoxyäquivalentgewichts (EEW) von 800 bis 1.500 g und
(A3) mindestens einem Epoxidharze eines Epoxyäquivalentgewichts (EEW) >1500 g,
wobei (A) aus 10 bis 40 Gew.-% (A1), 46 bis 68 Gew.-% (A2) und 5 bis 15 Gew.-% (A3) besteht, mit der Maßgabe, daß sich die Gew.-% (A1), (A2) und (A3) zu 100 Gew.-% addieren,
und
(B) mindestens 50 Gew.-%, bezogen auf den Pulverlack, mindestens eines Füllstoffs.

2. Pulverlack nach Anspruch 1 **dadurch gekennzeichnet, daß** er mindestens einen Beschleuniger (C) enthält.

3. Pulverlack nach einem der Ansprüche 1 oder 2, **dadurch gekennzeichnet, daß** er mindestens ein farb- und/oder effektgebendes Pigment (D) enthält.

4. Pulverlack nach einem der Ansprüche 1 bis 3, **dadurch gekennzeichnet, daß** er mindestens einen Zusatzstoff (E) enthält.

5. Pulverlack nach einem der Ansprüche 1 bis 4, **dadurch gekennzeichnet, daß** die Dichte des Füllstoffs (B) <3,6 g/cm³ beträgt.

6. Verwendung des Pulverlacks gemäß einem der Ansprüche 1 bis 5 zur Beschichtung von Formteilen.

7. Verwendung nach Anspruch 6, **dadurch gekennzeichnet, daß** die beschichteten Formteile einer formgebenden Nachbearbeitung unterzogen werden.

8. Verwendung nach Anspruch 7, **dadurch gekennzeichnet, daß** die Nachbearbeitung das Bohren und/oder Fräsen umfaßt.

9. Verwendung nach einem der Ansprüche 6 bis 8, **dadurch gekennzeichnet, daß** es sich bei den Formteilen um Motorblöcke handelt.

## Claims

1. Self-crosslinking powder coating material, comprising
(A) up to 50% by weight, based on the powder coating material, of a mixture of
(A1) at least one epoxy resin with an epoxy equivalent weight (EEW) <800 g,
(A2) at least one epoxy resin with an epoxy equivalent weight (EEW) of from 800 to 1500 g, and
(A3) at least one epoxy resin with an epoxy equivalent weight (EEW) >1500 g,
where (A) comprises from 10 to 40% by weight (A1), from 46 to 68% by weight (A2) and from 5 to 15% by weight (A3), with the proviso that the weight percentages of (A1), (A2) and (A3) add up to 100% by weight,
and
(B) at least 50% by weight, based on the powder coating material, of at least one filler.

2. Powder coating material according to Claim 1, **characterized in that** it comprises at least one accelerator (C).

3. Powder coating material according to either of Claims 1 and 2, **characterized in that** it comprises at least one colour and/or effect pigment (D).

4. Powder coating material according to any of Claims 1 to 3, **characterized in that** it comprises at least one additive (E).

5. Powder coating material according to any of Claims 1 to 4, **characterized in that** the density of the filler (B) is < 3.6 g/cm³.

6. Use of the powder coating material according to any of Claims 1 to 5 to coat shaped parts.

7. Use according to Claim 6, **characterized in that** the coated shaped parts are subsequently shaped by machining.

8. Use according to Claim 7, **characterized in that** the machining comprises drilling and/or milling.

9. Use according to any of Claims 6 to 8, **characterized in that** the shaped parts comprise engine blocks.

## Revendications

1. Peinture de poudre autoréticulante comprenant
(A) jusqu'à 50% en poids, par rapport à la peinture de poudre, d'un mélange constitué
(A1) d'au moins une résine époxyde d'un poids équivalent d'époxy (EEW) < 800 g;
(A2) d'au moins une résine époxyde d'un poids équivalent d'époxy (EEW) de 800 à 1500 g et
(A3) d'au moins une résine époxyde d'un poids équivalent d'époxy (EEW) > 1500 g,
(A) étant constitué de 10 à 40% en poids de (A1), 46 à 68% en poids de (A2) et 5 à 15% en poids de (A3), à condition que la somme des pourcentages en poids de (A1), (A2) et (A3) donne 100% en poids,
et
(B) au moins 50% en poids, par rapport à la peinture de poudre, d'au moins une charge.

2. Peinture de poudre selon la revendication 1, **caractérisée en ce qu'**elle comprend au moins un accélérateur (C).

3. Peinture de poudre selon la revendication 1 ou 2, **caractérisée en ce qu'**elle comprend au moins un pigment colorant et/ou donnant un effet (D).

4. Peinture de poudre selon l'une quelconque des revendications 1 à 3, **caractérisée en ce qu'**elle comprend au moins un additif (E).

5. Peinture de poudre selon l'une quelconque des revendications 1 à 4, **caractérisée en ce que** la masse volumique de la charge (B) est < 3,6 g/cm³.

6. Utilisation de la peinture de poudre selon l'une quelconque des revendications 1 à 5 pour le revêtement de pièces façonnées.

7. Utilisation selon la revendication 6, **caractérisée en ce que** les pièces façonnées revêtues sont soumises à un usinage ultérieur de façonnage.

8. Utilisation selon la revendication 7, **caractérisée en ce que** l'usinage ultérieur comprend le forage et/ou le fraisage.

9. Utilisation selon l'une quelconque des revendications 6 à 8, **caractérisée en ce que** les pièces façonnées sont des blocs-moteurs.
